# EUROPEAN PATENT SPECIFICATION

(11) **EP 4 180 658 B1**
(45) Date of publication and mention of the grant of the patent: **04.06.2025**
(21) Application number: 22851004.6
(22) Date of filing: 10.06.2022
(51) Int. Cl.: F03D 17/00

(54) **OPTIMAL POSITION FOR WIND TURBINE BLADE SOUND SIGNAL COLLECTION AND SELECTION METHOD THEREFOR**
VERFAHREN ZUR AUSWAHL DER OPTIMALEN POSITION ZUM SAMMELN VON TONSIGNALEN VON WINDTURBINENSCHAUFELN
POSITION OPTIMALE POUR COLLECTE DE SIGNAL SONORE DE PALE D'ÉOLIENNE ET SON PROCÉDÉ DE SÉLECTION

(30) Priority: 08.09.2021 CN 202111051210
(43) Date of publication of application: 17.05.2023
(73) Proprietor: Huaneng Clean Energy Research Institute, Beijing 102209 (CN)
(72) Inventor: WANG, Jianzhao, Beijing 102209 (CN); LI, Weidong, Beijing 102209 (CN); REN, Xin, Beijing 102209 (CN); WANG, Hua, Beijing 102209 (CN); TONG, Tong, Beijing 102209 (CN); WANG, Enmin, Beijing 102209 (CN); ZHAO, Pengcheng, Beijing 102209 (CN); LI, Xiaoxiang, Beijing 102209 (CN)
(74) Representative: Groth & Co. KB
(86) International application number: PCT/CN2022/098268
(87) International publication number: WO 2023/035708

(56) References cited:
- CN-A- 109 322 797
- CN-A- 109 322 797
- CN-A- 111 120 223
- CN-A- 111 287 913
- CN-A- 113 090 471
- CN-A- 113 790 129
- JP-A- 2010 281 279
- US-A1- 2010 284 787
- US-A1- 2014 278 151
- US-A1- 2021 055 266
- US-B2- 9 395 337

## Description

### Cross-references to related applications

The present application is based on the China patent application with the application number of 202111051210.X and the filing date of Sep. 8, 2021, and claims priority of this China patent application.

### Technical field

The present invention belongs to the technical field of wind power generation, and particularly relates to an optimal position for collecting sound signal of wind turbine vanes and a selection method thereof.

### Technical background

With the development of power generation technology using new energy sources, wind turbines are more and more widely used. Generally, wind turbines are located in harsh environments, and continuous erosion such as by wind, sand, freezing, salt mist and force will cause vane damage and failure. In severe cases, vane fracture will occur, which will not only affect the normal power generation of wind turbines, but also cause accidents of personal safety, equipment safety, etc., resulting in greater economic losses.

For a long time, detection of the damage and failure of vanes mostly depends on the on-site patrol inspection of maintenance personnel, and whether the vanes work normally or not is judged by the manual method of hearing and distinguishing the abnormal aerodynamic sound by ears, which is greatly affected by the climate and is inefficient. In related technologies, some electronic devices collect the sound signals emitted by the vanes, and then analyze them in time domain and frequency domain to judge the fault of the vanes. However, because the wind turbines are located in the wild, the howling sound of the excited vanes is affected by various aerodynamic noises, and the electronic devices that collect and capture the sound signals vary greatly due to different positions, and the collected sound signals are often not valid signals, which brings great obstacles to the process of analyzing the fault of the vanes through the sound signals. Relevant backgound art is disclosed in US 9 395 337 B2, JP 2010/281279 A, US 2021/055266 A1, CN 109 322 797 A and CN 113 090 471 A.

### Summary of the Invention

The purpose of the present invention is to provide an optimal position for collecting sound signal of wind turbine vanes and its selection method, which can obtain a higher amplitude of sound pressure intensity and a wider spectrum distribution of the collected sound signal, and which can meet the needs of high-quality sound collection and fault analysis of the vanes, and at the same time, can superimpose the sound features generated by malfunction of the vanes, which is conducive to the subsequent fault feature analysis.

The present invention is realized by the following technical schemes:
In one aspect, the embodiments of the present invention provide an optimal position for collecting sound signal of wind turbine vanes, which is located within the vertical projection of the windward rotation plane of wind turbine vanes on the ground, and the distance between the optimal position and the center point of the tower tube is R×sinα, where R is the rotation radius of the vanes, and α is the included angle between a vane closest to the ground and the vertical axis of the tower tube when the sound pressure and sound pressure level intensity generated by normal operation of the wind turbine are the highest.

In some embodiments, α is 50°.

In another aspect, the embodiments of the present invention provide a method for selecting the optimal position for collecting sound signal of wind turbine vanes, which comprises the following steps:
S1: selecting a main wind direction of the wind turbine, and determining the windward rotation plane of the vane of the wind turbine according to the main wind direction;
S2: calculating a radius of the windward rotation plane of the vane of the wind turbine according to specification parameters of the wind turbine;
S3: measuring sound pressure and sound pressure level intensity generated during normal operation of the wind turbine, and when the sound pressure and sound pressure level intensity are at maximum values, taking the projection point of the tip of a vane within the vertical projection of the windward rotation plane of the vane of the wind turbine on the ground at this time to be the optimal position for collecting sound signal of the wind turbine vanes.

In some embodiments, in S1, the rotation direction of the vane is clockwise against the wind.

In some embodiments, in S2, the specification parameters of the wind turbine comprise the radius of a wind turbine hub and the length of the vane.

In some embodiments, in S3, when the sound pressure and sound pressure level intensity are at maximum values, the included angle between the vane closest to the ground and the vertical axis of the tower tube is 50°.

In some embodiments, in S3, according to the fluctuation range of the main wind direction in the same season, a plurality of sound signal collecting points for the wind turbine vanes are added.

In some embodiments, in S3, a plurality of sound signal collecting points for the wind turbine vanes are added according to the change of main wind directions in different seasons.

The present invention has the following beneficial technical effects:
In the embodiments of the present invention, the optimal position for collecting sound signal of wind turbine vanes is simple to set, and sound pressure intensity with higher amplitude can be obtained; the frequency spectrum distribution of the collected sound signal is wider, which can meet the requirement of high-quality sound collection and fault analysis of the vanes; meanwhile, the sound features generated by malfunction of the vanes can be superimposed, which is beneficial for the subsequent fault feature analysis.

As wind turbines in wind farms are mostly arranged in the wild with harsh environment, more and more electronic detection devices are used to collect sound signals and analyze them in time and frequency domain to detect vane damage. However, the quality of the sound signals collected at the front end varies greatly, and some of them can't even reflect the sound features caused by malfunction of vanes, which has a great impact on subsequent fault analysis. In the method for selecting the optimal position for collecting sound signal of wind turbine vanes proposed by the embodiments of the present invention, the windward rotation plane of the wind turbine is determined, and when the sound pressure and sound pressure level intensity generated by normal operation of the wind turbine are at maximum values, the projection point of the tip of a vane within the vertical projection of the windward rotation plane of the wind turbine on the ground at this time is determined as the optimal position for collecting sound signal of the wind turbine vanes. The aerodynamic sound emitted by the vane of the wind turbine when it is rotating to sweep the wind is mainly generated at the leading edge of the vane, and when the sound pressure and sound pressure level intensity generated by the wind turbine are the highest, the sound pressure and sound pressure level obtained by collecting sound signal at the projection point where the tip of the vane is vertically projected downwards to the ground position are also the highest. By setting a sound signal collecting device at this point, firstly, sound pressure intensity with higher amplitude can be collected; secondly, the spectrum distribution of sound signal is wide, ranging from 0 to 8KHz, which meets the needs of high-quality sound collection and fault analysis of vanes; thirdly, the collected sound signals can be superimposed with the sound features generated by malfunction of the vanes, which is beneficial to subsequent feature analysis.

Furthermore, as proved by experiments, when the vane of the wind turbine rotates clockwise to an angle of 130° relative to the 12 o'clock direction, the sound pressure and sound pressure level intensity generated will be the highest, and at this time the angle between the vane nearest to the ground and the vertical axis of the tower tube is 50°.

Furthermore, in the same season, there may be a small range of fluctuations in the main wind direction. According to the fluctuation range, adding a number of sound signal collecting points for the wind turbine vanes can effectively improve the accuracy of signal collection.

Furthermore, in different seasons, due to the seasonal winds, each wind turbine in the wind farm is affected by the wind directions, and the vane rotation will have one or two main wind rotation planes. According to the change of the wind directions, a number of sound signal collecting points for the wind turbine vanes are added, which can effectively improve the accuracy of signal collection.

### Brief description of drawings

Fig. 1 is a front view of a windward rotation plane of wind turbine vanes;
Fig. 2 is a schematic diagram of the optimal position for collecting sound signal of wind turbine vanes.

In the drawings: 1 represents the tower tube, 2 represents the vane, 3 represents the hub, and 4 represents the vertical projection of the windward rotation plane of the wind turbine vanes on the ground.

### Detailed description of specific embodiments

Hereinafter, the appended drawings and detailed embodiments are used to explain the present invention in further detail, in an illustrative manner rather than in a limiting manner.

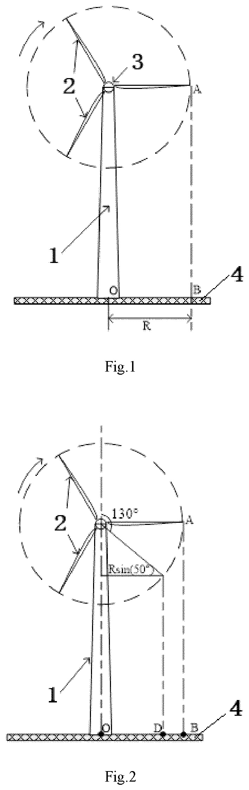

As shown in Fig. 1 and Fig. 2, in this embodiment of the present invention, the optimal position for collecting sound signal of of wind turbine vanes is located within the vertical projection 4 of the windward rotation plane of the wind turbine vanes on the ground, which is the line segment of OB in the figure. The distance between the optimal position and the center point O of the tower tube is R× sinα, R is the rotation radius of the vane, and the rotation radius of the vane R = hub radius + vane length; When the sound pressure and sound pressure level intensity generated by normal operation of the wind turbine are the highest, the angle between the vane closest to the ground and the vertical axis of the tower tube is α, and α is generally 50°. B is the projection point of the maximum rotation radius of the vane.

The method for selecting the aforementioned optimal position for collecting sound signal of the wind turbine vanes provided in this embodiment comprises steps S1-S3.

S1, selecting the main wind direction of the wind turbine, and determining the windward rotation plane of the vane of the wind turbine according to the main wind direction; wherein the vane usually rotates clockwise.

S2, calculating the radius of the windward rotation plane of the vane of the wind turbine according to specification parameters of the wind turbine; wherein the specification parameters of the wind turbine comprise the radius of the hub 3 and the length of the vane 2.

S3, measuring the sound pressure and sound pressure level intensity generated during normal operation of the wind turbine, and when the sound pressure and sound pressure level intensity are at maximum value, taking the projection point D of the tip of a vane 2 within the vertical projection 4 of the windward rotation plane of the vane of the wind turbine on the ground to be the optimal position for collecting sound signal of the wind turbine vanes. As proved by experiments, when the vane of the wind turbine rotates clockwise to an included angle of 130° relative to the 12 o'clock direction, the generated sound pressure and sound pressure level intensity are the highest. At this time, the angle between the vane 2 closest to the ground and the vertical axis of the tower tube 1 is 50°.

When the direction of the incoming wind changes, the optimal position D changes accordingly, and the optimal position D is still located in the same plane as the rotation plane.

In one embodiment of the present invention, according to the fluctuation range of the main wind direction in the same season, a number of sound signal collecting points for the wind turbine vanes are added. In the same season, the main wind direction may fluctuate in a small range. According to the fluctuation range, adding a number of sound signal collecting points for the wind turbine vanes can effectively improve the accuracy of signal collection.

In one embodiment of the present invention, according to the change of the main wind directions in different seasons, a number of sound signal collecting points for the wind turbine vanes are added. In different seasons, due to the seasonal winds, each wind turbine unit in the wind farm is affected by the wind directions, and the vane rotation will have one or two main windward rotation planes. According to the change of the wind directions, adding a plurality of sound signal collecting points for the wind turbine vanes can effectively improve the accuracy of signal collection.

The scope of protection is defined by the appended claims.

## Claims

1. An optimal position for collecting sound signal of wind turbine vanes, **characterized in that**, the optimal position is located within the vertical projection of the windward rotation plane of an vane of a wind turbine on the ground, and the distance between the optimal position and the center point of a tower tube (1) is R×sinα, where R is the rotation radius of the vane, and α is the included angle between a vane (2) closest to the ground and the vertical axis of the tower tube (1) when the sound pressure and sound pressure level intensity generated by normal operation of the wind turbine are the highest.

2. The optimal position for collecting sound signal of wind turbine vanes according to claim 1, **characterized in that** α is 50°.

3. A method for selecting the optimal position for collecting sound signal of wind turbine vanes according to claim 1 or 2, **characterized in that** the method comprises:
S1: selecting a main wind direction of the wind turbine, and determining the windward rotation plane of the vane of the wind turbine according to the main wind direction;
S2: calculating a radius of the windward rotation plane of the vane of the wind turbine according to specification parameters of the wind turbine;
S3: measuring sound pressure and sound pressure level intensity generated during normal operation of the wind turbine, and when the sound pressure and sound pressure level intensity are at maximum values, taking the projection point of the tip of a vane (2) within the vertical projection (4) of the windward rotation plane of the vane of the wind turbine on the ground at this time to be the optimal position for collecting sound signal of the wind turbine vanes.

4. The method for selecting the optimal position for collecting sound signal of wind turbine vanes according to claim 3, **characterized in that**, in S1, the rotation direction of the vane is clockwise against the wind.

5. The method for selecting the optimal position for collecting sound signal of wind turbine vanes according to claim 3 or 4, **characterized in that**, in S2, the specification parameters of the wind turbine comprise the radius of a wind turbine hub (3) and the length of the vane (2).

6. The method for selecting the optimal position for collecting sound signal of wind turbine vanes according to any one of claim 3 to 5, **characterized in that**, in S3, when the sound pressure and sound pressure level intensity are at maximum values, the included angle between the vane (2) closest to the ground and the vertical axis of the tower tube (1) is 50°.

7. The method for selecting the optimal position for collecting sound signal of wind turbine vanes according to any one of claims 3 to 6, **characterized in that**, in S3, according to the fluctuation range of the main wind direction in the same season, a plurality of sound signal collecting points for the wind turbine vanes are added.

8. The method for selecting the optimal position for collecting sound signal of wind turbine vanes according to any one of claims 3 to 7, **characterized in that**, in S3, a plurality of sound signal collecting points for the wind turbine vanes are added according to the change of main wind directions in different seasons.

## Patentansprüche

1. Optimale Position zum Sammeln von Schallsignalen von Windkraftanlagenblättern, **dadurch gekennzeichnet, dass** sich die optimale Position innerhalb der vertikalen Projektion der windseitigen Rotationsebene eines Blatts einer Windkraftanlage auf den Boden befindet und der Abstand zwischen der optimalen Position und dem Mittelpunkt eines Turmrohrs (1) R x sinα beträgt, wobei R der Rotationsradius des Blatts ist und α der zwischen einem dem Boden am nächsten gelegenen Blatt (2) und der vertikalen Achse des Turmrohrs (1) eingeschlossene Winkel ist, wenn der Schalldruck und die Intensität des Schalldruckpegels, die durch den Normalbetrieb der Windkraftanlage erzeugt werden, am höchsten sind.

2. Optimale Position zum Sammeln von Schallsignalen von Windkraftanlagenblättern nach Anspruch 1, **dadurch gekennzeichnet, dass** α 50° beträgt.

3. Verfahren zur Auswahl der optimalen Position zum Sammeln von Schallsignalen von Windkraftanlagenblättern nach Anspruch 1 oder 2, **dadurch gekennzeichnet, dass** das Verfahren Folgendes umfasst:
S1: Auswählen einer Hauptwindrichtung der Windkraftanlage und Bestimmen der windseitigen Rotationsebene des Blatts der Windkraftanlage gemäß der Hauptwindrichtung;
S2: Berechnen eines Radius der windseitigen Rotationsebene des Blatts der Windkraftanlage gemäß Spezifikationsparametern der Windkraftanlage;
S3: Messen des Schalldrucks und der Intensität des Schalldruckpegels, die während des Normalbetriebs der Windkraftanlage erzeugt werden, und, wenn der Schalldruck und die Intensität des Schalldruckpegels einen Maximalwert angenommen haben, Übernehmen des Projektionspunkts der Spitze eines Blatts (2) innerhalb der vertikalen Projektion (4) der windseitigen Rotationsebene des Blatts der Windkraftanlage auf den Boden zu diesem Zeitpunkt als die optimale Position zum Sammeln von Schallsignalen der Windkraftanlagenblätter.

4. Verfahren zur Auswahl der optimalen Position zum Sammeln von Schallsignalen von Windkraftanlagenblättern nach Anspruch 3, **dadurch gekennzeichnet, dass** bei S1 die Rotationsrichtung des Blatts im Uhrzeigersinn gegen den Wind ist.

5. Verfahren zur Auswahl der optimalen Position zum Sammeln von Schallsignalen von Windkraftanlagenblättern nach Anspruch 3 oder 4, **dadurch gekennzeichnet, dass** bei S2 die Spezifikationsparameter der Windkraftanlage den Radius einer Windkraftanlagennabe (3) und die Länge des Blatts (2) umfassen.

6. Verfahren zur Auswahl der optimalen Position zum Sammeln von Schallsignalen von Windkraftanlagenblättern nach einem der Ansprüche 3 bis 5, **dadurch gekennzeichnet, dass** bei S3, wenn der Schalldruck und die Intensität des Schalldruckpegels einen Maximalwert angenommen haben, der zwischen dem dem Boden am nächsten gelegenen Blatt (2) und der vertikalen Achse des Turmrohrs (1) eingeschlossene Winkel 50° beträgt.

7. Verfahren zur Auswahl der optimalen Position zum Sammeln von Schallsignal von Windkraftanlagenblättern nach einem der Ansprüche 3 bis 6, **dadurch gekennzeichnet, dass** bei S3 gemäß dem Schwankungsbereich der Hauptwindrichtung in der gleichen Jahreszeit eine Vielzahl von Schallsignal-Sammelpunkten für die Windkraftanlagenblätter hinzugefügt werden.

8. Verfahren zur Auswahl der optimalen Position zum Sammeln von Schallsignal von Windkraftanlagenblättern nach einem der Ansprüche 3 bis 7, **dadurch gekennzeichnet, dass** bei S3 eine Vielzahl von Schallsignal-Sammelpunkten für die Windkraftanlagenblätter gemäß der Änderung der Hauptwindrichtung in verschiedenen Jahreszeiten hinzugefügt werden.

## Revendications

1. Position optimale pour la collecte d'un signal sonore d'ailettes d'éolienne, **caractérisé en ce que**, la position optimale est située à l'intérieur de la projection verticale du plan de rotation au vent d'une ailette d'une éolienne sur le sol, et la distance entre la position optimale et le point central d'un tube de tour (1) est R×sinα, où R est le rayon de rotation de l'ailette, et α est l'angle inclus entre une ailette (2) la plus proche du sol et l'axe vertical du tube de tour (1) lorsque la pression acoustique et l'intensité de niveau de pression acoustique générées par le fonctionnement normal de l'éolienne sont les plus élevées.

2. Position optimale pour la collecte d'un signal sonore d'ailettes d'éolienne selon la revendication 1, **caractérisée en ce que** α est de 50 °.

3. Procédé de sélection de la position optimale pour la collecte d'un signal sonore d'ailettes d'éolienne selon la revendication 1 ou 2, **caractérisé en ce que** le procédé comprend :
S1 : la sélection d'une direction de vent dominant de l'éolienne, et la détermination du plan de rotation au vent de l'ailette de l'éolienne en fonction de la direction de vent dominant ;
S2 : le calcul d'un rayon du plan de rotation au vent de l'ailette de l'éolienne en fonction de paramètres de spécification de l'éolienne ;
S3 : la mesure d'une pression acoustique et d'une intensité de niveau de pression acoustique générées pendant le fonctionnement normal de l'éolienne, et lorsque la pression acoustique et l'intensité de niveau de pression acoustique sont à des valeurs maximales, la prise du point de projection de la pointe d'une ailette (2) à l'intérieur de la projection verticale (4) du plan de rotation au vent de l'ailette de l'éolienne sur le sol à ce moment comme étant la position optimale pour la collecte d'un signal sonore des ailettes d'éolienne.

4. Procédé de sélection de la position optimale pour la collecte d'un signal sonore d'ailettes d'éolienne selon la revendication 3, **caractérisé en ce que**, à S1, la direction de rotation de l'ailette est un sens horaire contre le vent.

5. Procédé de sélection de la position optimale pour la collecte d'un signal sonore d'ailettes d'éolienne selon la revendication 3 ou 4, **caractérisé en ce que**, à S2, les paramètres de spécification de l'éolienne comprennent le rayon d'un moyeu d'éolienne (3) et la longueur de l'ailette (2).

6. Procédé de sélection de la position optimale pour la collecte d'un signal sonore d'ailettes d'éolienne selon l'une quelconque des revendications 3 à 5, **caractérisé en ce que**, à S3, lorsque la pression acoustique et l'intensité de niveau de pression acoustique sont à des valeurs maximales, l'angle inclus entre l'ailette (2) la plus proche du sol et l'axe vertical du tube de tour (1) est de 50 °.

7. Procédé de sélection de la position optimale pour la collecte d'un signal sonore d'ailettes d'éolienne selon l'une quelconque des revendications 3 à 6, **caractérisé en ce que**, à S3, en fonction de la plage de fluctuation de la direction de vent dominant dans la même saison, une pluralité de points de collecte de signal sonore pour les ailettes d'éolienne sont ajoutés.

8. Procédé de sélection de la position optimale pour la collecte d'un signal sonore d'ailettes d'éolienne selon l'une quelconque des revendications 3 à 7, **caractérisé en ce que**, à S3, une pluralité de points de collecte de signal sonore pour les ailettes d'éoliennes sont ajoutés en fonction du changement des directions de vent dominant dans de différentes saisons.
